# EUROPEAN PATENT SPECIFICATION

(11) **EP 4 556 707 B1**
(45) Date of publication and mention of the grant of the patent: **28.10.2026**
(21) Application number: 23881601.1
(22) Date of filing: 28.09.2023
(51) Int. Cl.: F03D 7/02, F03D 17/00, F03D 7/04

(54) **WIND TURBINE CONTROL METHOD AND APPARATUS, AND CONTROLLER**
WINDTURBINENSTEUERUNGSVERFAHREN UND -VORRICHTUNG SOWIE STEUERGERÄT
PROCÉDÉ ET APPAREIL DE COMMANDE D'ÉOLIENNE, ET DISPOSITIF DE COMMANDE

(30) Priority: 28.10.2022 CN 202211336027
(43) Date of publication of application: 21.05.2025
(73) Proprietor: GOLDWIND SCIENCE & TECHNOLOGY CO., LTD., Xinjiang 830026 (CN)
(72) Inventor: HOU, Chunyi, Xinjiang 830026 (CN)
(74) Representative: Hoffmann Eitle
(86) International application number: PCT/CN2023/122841
(87) International publication number: WO 2024/088022

(56) References cited:
- EP-B1- 3 027 895
- CN-A- 110 210 044
- CN-A- 112 283 047
- CN-A- 113 803 219
- CN-A- 114 909 264
- CN-B- 110 875 604
- US-A1- 2013 106 107
- US-A1- 2021 317 818
- US-A1- 2021 317 818

## Description

### CROSS-REFERENCE TO RELATED APPLICATION

The present application claims priority to Chinese Patent Application No. 202211336027.9, entitled "METHOD AND APPARATUS FOR CONTROLLING WIND GENERATING SET, AND CONTROLLER" filed on October 28, 2022.

### TECHNICAL FIELD

The present application belongs to the field of wind power generation, and in particular, relates to a method and apparatus for controlling a wind turbine, and a controller.

### BACKGROUND

With the intensification of energy shortage, wind energy has been vigorously promoted as a clean energy source. A wind turbine is an apparatus that can convert wind energy into electrical energy. A blade root load of the wind turbine is one of the important parameters of the wind turbine. During the operation of the wind turbine, it is necessary to pay attention to the blade root load of the wind turbine. If the blade root load is too high, safety risks will be posed to the wind turbine and the safety of the wind turbine will be reducec

Documents considered during the patent prosecution are i.a.: EP 3027895 B1, US 2013/106107 A1, CN 110875604 B and US 2021/317818 A1.

### SUMMARY

Embodiments of the present application provide a method and apparatus for controlling a wind turbine, and a controller, which can improve the safety of the wind turbine.

In a first aspect, embodiments of the present application provide a method for controlling a wind turbine, including: obtaining a first blade root load parameter of a first blade at a first position in a current rotation period; obtaining second blade root load parameters, third blade root load parameters, and a first change amount, where the second blade root load parameters include blade root load parameters of other blades at the first position in a previous rotation period, the third blade root load parameters include blade root load parameters of the other blades at a second position that is later reached than the first position in the previous rotation period, and the first change amount represents a change trend of blade root load parameters of blades from the first position to the second position; obtaining a predicted blade root load of the first blade at the second position in the current rotation period based on the first blade root load parameter, the second blade root load parameters, the third blade root load parameters, and the first change amount; and controlling the wind turbine according to the predicted blade root load.

In a second aspect, embodiments of the present application provide an apparatus for controlling a wind turbine, including: a first obtaining module, configured to obtain a first blade root load parameter of a first blade at a first position in a current rotation period; a second obtaining module, configured to obtain second blade root load parameters, third blade root load parameters, and a first change amount, where the second blade root load parameters include blade root load parameters of other blades at the first position in a previous rotation period, the third blade root load parameters include blade root load parameters of the other blades at a second position that is later reached than the first position in the previous rotation period, and the first change amount represents a change trend of blade root load parameters of blades from the first position to the second position; a prediction module, configured to obtain a predicted blade root load of the first blade at the second position in the current rotation period based on the first blade root load parameter, the second blade root load parameters, the third blade root load parameters, and the first change amount; and a control module, configured to control the wind turbine according to the predicted blade root load.

In a third aspect, embodiments of the present application provide a controller for a wind turbine, including: a processor and a memory storing computer program instructions, where the processor implements the method for controlling a wind turbine in the first aspect when executing the computer program instructions.

In a fourth aspect, embodiments of the present application provide a wind turbine, including the controller for a wind turbine in the third aspect.

Embodiments of the present application provide a method and apparatus for controlling a wind turbine, and a controller, where a blade root load of the first blade at a position that has currently not been reached, namely, the second position, in the current rotation period is predicted according to the first blade root load parameter, the second blade root load parameters, the third blade root load parameters, and the first change amount. The first blade root load parameter includes a blade root load parameter of the first blade at the first position in the current rotation period, the second blade root load parameters include blade root load parameters of other blades at the first position in a previous rotation period, and the third blade root load parameters include blade root load parameters of the other blades at the second position in the previous rotation period. The first blade root load parameter can provide a basis of a blade root load in the current rotation period, the second blade root load parameters and the third blade root load parameters can provide blade root loads of the blades at the first position and the second position in the previous rotation period, and the first change amount represents a change trend of blade root load parameters from the first position to the second position, which can compensate for a possible deviation between the blade root load in the previous rotation period and the blade root load in the current rotation period, thereby eliminating the lag of the predicted blade root load and improving the accuracy of the predicted blade root load. By controlling the wind turbine according to the accurate predicted blade root load, the control on the wind turbine can be started in advance more stably, thereby reducing safety risks of the blade root load on the wind turbine and improving the safety of the wind turbine.

### BRIEF DESCRIPTION OF THE DRAWINGS

In order to explain the technical solutions of embodiments of the present application more clearly, the accompanying drawings required in embodiments of the present application will be briefly introduced below. A person of ordinary skill in the art can obtain other drawings based on these drawings without creative work.
Fig. 1 is a flowchart of a method for controlling a wind turbine provided in an embodiment of the present application;
Fig. 2 is a schematic view of comparison between a predicted blade root load and a measured blade root load obtained in an embodiment of the present application;
Fig. 3 is a flowchart of a method for controlling a wind turbine provided in another embodiment of the present application;
Fig. 4 is a schematic view of comparison between a predicted blade root edgewise direction load and a measured blade root edgewise direction load obtained in an embodiment of the present application;
Fig. 5 is a schematic view of comparison between a predicted blade root flapwise direction load and a measured blade root flapwise direction load obtained in an embodiment of the present application;
Fig. 6 is a flowchart of a method for controlling a wind turbine provided in still another embodiment of the present application;
Fig. 7 is a schematic structural view of an apparatus for controlling a wind turbine provided in an embodiment of the present application; and
Fig. 8 is a schematic structural view of a controller for a wind turbine provided in an embodiment of the present application.

### DETAILED DESCRIPTION

Features and exemplary embodiments of various aspects of the present application will be described in detail below. In order to make the objectives, technical solutions, and advantages of the present application clearer, the present application will be further described in detail below with reference to the accompanying drawings and specific embodiments. It should be understood that the specific embodiments described here are only intended to explain the present application, but not to limit the present application. For those skilled in the art, the present application can be implemented without some of these specific details. The following descriptions of embodiments are merely to provide a better understanding of the present invention by showing examples of the present invention.

With the intensification of energy shortage, wind energy has been vigorously promoted as a clean energy source. A wind turbine is an apparatus that can convert wind energy into electrical energy. The blade root load of the wind turbine is one of the important parameters of the wind turbine. During the operation of the wind turbine, it is necessary to pay attention to the blade root load of the wind turbine. If the blade root load is too high, safety risks will be posed to the wind turbine and the safety of the wind turbine will be reduced.

The present application provides a method and apparatus for controlling a wind turbine, and a controller, which can use a blade root load parameter of a blade of the wind turbine at position A in a current rotation period, as well as root load parameters of other blades different from this blade at position A and position B in a rotation period prior to the current rotation period, to predict a blade root load of this blade when reaching position B in the current rotation period, thereby controlling the wind turbine in advance according to the predicted blade root load, taking measures in advance to reduce safety risks of the blade root load on the wind turbine, and improving the safety of the wind turbine.

Hereinafter, the method and apparatus for controlling a wind turbine, and the controller provided in the present application will be explained respectively.

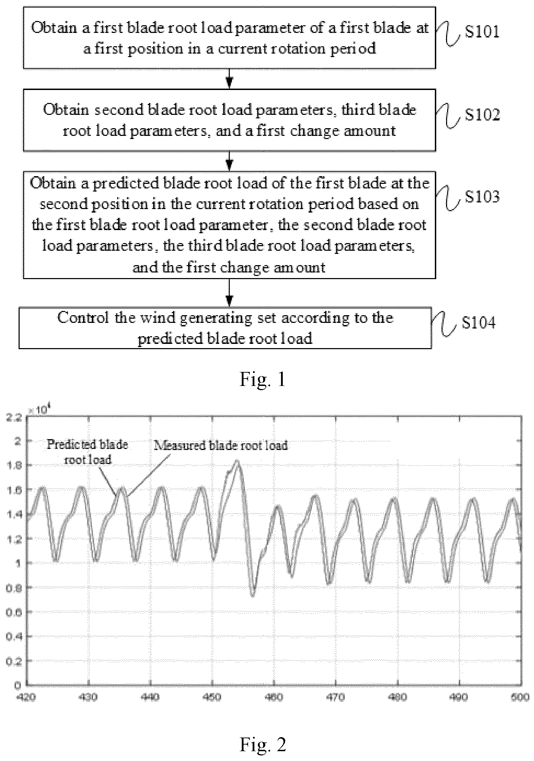

A first aspect of the present application provides a method for controlling a wind turbine, which can predict a blade root load of a blade of the wind turbine at a position that has not been reached, and control the wind turbine. Fig. 1 is a flowchart of a method for controlling a wind turbine provided in an embodiment of the present application. As shown in Fig. 1, the method for controlling a wind turbine may include steps S101 to S104.

In S101, a first blade root load parameter of a first blade at a first position is obtained in a current rotation period.

The first blade is any blade in the wind turbine. One position can be selected as the first position from the positions where the first blade has passed or is currently located in the current rotation period. The position may be represented by an azimuth or other parameters, which is not limited here. The rotation period is a period when the blade rotates one circle. The first blade root load parameter includes a blade root load parameter of the first blade at the first position in the current rotation period.

Sensors can be pre-arranged on blades of the wind turbine to collect blade root load parameters of the blades. A blade root load can be obtained according to a blade root load parameter. For example, the blade root load parameter may include a blade root edgewise direction load and a blade root flapwise direction load. For another example, the blade root load parameter may include a blade root load, that is, the blade root load parameter may be directly the blade root load.

In S102, second blade root load parameters, third blade root load parameters, and a first change amount are obtained.

The second blade root load parameters include blade root load parameters of other blades at the first position in a previous rotation period. The third blade root load parameters include blade root load parameters of the other blades at a second position that is later than the first position to reach in the previous rotation period. The other blades include blades in the wind turbine except the first blade. The previous rotation period is a rotation period prior to the current rotation period. Within one rotation period, the same blade first passes through the first position and then passes through the second position. That is, within one rotation period, the blade reaches the second position later in the first position and the second position. The second blade root load parameters and the third blade root load parameters are blade root load parameters within the same rotation period or several rotation periods prior to the current rotation period. In some examples, the previous rotation period here may be the last rotation period prior to the current rotation period. There is an angle between the first position and the second position.

The first change amount represents a change trend of blade root load parameters of blades from the first position to the second position. In actual operation, the blade root load of the wind turbine changes rapidly due to the influence of various factors such as wind speed and pitch angle. The blade root load parameters of the other blades in the previous rotation period may have a deviation from their blade root load parameters in the current rotation period, the deviation may lead to lag in the subsequently predicted blade root load, and the first change amount can be used to compensate for the deviation to eliminate the lag.

In some examples, the first change amount can be obtained according to a rotation torque parameter or other parameters that can reflect the change trend of the blade root load parameters of the blades from the first position to the second position, which is not limited here.

In S103, a predicted blade root load of the first blade at the second position in the current rotation period is obtained based on the first blade root load parameter, the second blade root load parameters, the third blade root load parameters, and the first change amount.

The first blade root load parameter includes a blade root load parameter of the first blade at the first position in the current rotation period, the second blade root load parameters include blade root load parameters of other blades at the first position in a previous rotation period, and the third blade root load parameters include blade root load parameters of the other blades at the second position in the previous rotation period. The first blade root load parameter can be used as a basis for predicting the blade root load of the first blade at the second position in the current rotation period. A change amount on the basis of the first blade root load parameter of the first blade from the first position to the second position in the current rotation period can be predicted from the second blade root load parameters, the third blade root load parameters, and the first change amount, to obtain the predicted blade root load of the first blade at the second position in the current rotation period. The predicted blade root load is a blade root load of the first blade at the second position in the current rotation period that is obtained by prediction.

As the predicted blade root load is obtained based on the first blade root load parameter, the second blade root load parameters, the third blade root load parameters, and the first change amount, blade root load parameters of a blade at the first position and the second position in the previous rotation period can be used to predict a blade root load parameter of the blade at the second position in the current rotation period, and the first change amount can be used to compensate for a possible deviation between the blade root load parameter in the previous rotation period and the blade root load parameter predicted based on the second blade root load parameters and the third blade root parameters, to eliminate lag that may be caused by the deviation, thereby accurately predicting a blade root load of the blade after a period of time, such as 0.3 second to 1 second.

In S104, the wind turbine is controlled according to the predicted blade root load.

The accuracy of the predicted blade root load obtained in the above step is high, and the wind turbine can be controlled to pitch according to the predicted blade root load. For example, when the predicted blade root load exceeds a blade root load safety threshold, the wind turbine can be controlled to retract paddles, to increase the pitch angle, and reduce wind energy absorption of impellers, thereby achieving early control on the reduction of the blade root load.

In some examples, the blades in the wind turbine can be sequentially designated as the first blade, and a maximum value of the predicted blade root loads obtained by designating each blade in the wind turbine as the first blade can be selected. When the maximum value is greater than the blade root load safety threshold, the wind turbine is controlled to retract paddles.

In embodiments of the present application, a blade root load of the first blade at a position that the first blade has currently not reached, namely, the second position, in the current rotation period is predicted according to the first blade root load parameter, the second blade root load parameters, the third blade root load parameters, and the first change amount. The first blade root load parameter includes a blade root load parameter of the first blade at the first position in the current rotation period, the second blade root load parameters include blade root load parameters of other blades at the first position in a previous rotation period, and the third blade root load parameters include blade root load parameters of the other blades at the second position in the previous rotation period. The first blade root load parameter can provide a basis of a blade root load in the current rotation period, the second blade root load parameters and the third blade root load parameters can provide blade root loads of the blades at the first position and the second position in the previous rotation period, and the first change amount represents a change trend of blade root load parameters from the first position to the second position, which can compensate for a possible deviation between the blade root load in the previous rotation period and the blade root load in the current rotation period, thereby eliminating the lag of the predicted blade root load and improving the accuracy of the predicted blade root load. By controlling the wind turbine according to the accurate predicted blade root load, the control on the wind turbine can be started in advance, thereby making the control more stably, reducing safety risks of the blade root load on the wind turbine, and improving the safety of the wind turbine.

To explain the accuracy of the predicted blade root load in embodiments of the present application, blade root load parameters are collected when the first blade reaches the second position in the current rotation period, and a measured blade root load of the first blade at the second position in the current rotation period is obtained according to the collected blade root load parameters. Fig. 2 is a schematic view of comparison between a predicted blade root load and a measured blade root load obtained in an embodiment of the present application, where the horizontal axis presents time in seconds (s), and the vertical axis represents torque in kilonewton meters (kNm) which can reflect the blade root load. As shown in Fig. 2, the predicted blade root load has certain phase advance compared to the measured blade root load, and the amplitude error between the predicted blade root load and the measured blade root load is very small, which can basically achieve consistency.

Compared with the solution of controlling the wind turbine according to the measured blade root load under the same power generation loss, the method for controlling a wind turbine in embodiments of the present application can achieve a better load reduction effect under the same conditions. For example, under standard design conditions, the comparison between the control on the wind turbine using the measured blade root load and the control on the wind turbine using the predicted blade root load in embodiments of the present application is shown in Table 1:

**Table 1**

| | Ultimate blade root load | Ultimate blade root load ratio | Power generation ratio |
|---|---|---|---|
| Design standards | 22360 | 100% | 100% |
| Control on the wind turbine using the measured blade root load | 21259 | 95.0% | 98.5% |
| Control on the wind turbine using the predicted blade root load | 20857 | 93.3% | 98.4% |

As shown in Table 1, under the same design standards, the power generation ratio of the control on the wind turbine using the predicted blade root load is only 0.1% lower than that using the measured blade root load, but the ultimate blade root load ratio of the control on the wind turbine using the predicted blade root load is 1.7% lower than that using the measured blade root load, showing that the control on the wind turbine using the predicted blade root load can achieve a better load reduction effect.

In some embodiments, the above step S103 may be implemented as follow: obtaining a predicted correction amount using a weight corresponding to each of other blades, the third blade root load parameter and second blade root load parameter corresponding to each of other blades, and the first change amount; and determining the predicted blade root load according to the first blade root load parameter and the predicted correction amount.

Weights can be preset for the other blades. The weights are proportion coefficients of the blade root load parameters of the other blades used for predicting the predicted blade root load of the first blade, and can be set according to the operation scenario, structure, operation requirements, etc. of the wind turbine, which is not limited here.

In some examples, for each of other blades, a difference between the second blade root load parameter and third blade root load parameter of the other blade is calculated, an initial correction amount is predicted using the weight of various other blade and the difference between the second blade root load parameter and third blade root load parameter, and then the initial correction amount is compensated using the first change amount to obtain the predicted correction amount. The predicted correction amount can represent and predict a change amount on the basis of the first blade root load parameter. The predicted correction amount may be positive or negative, which is not limited here. The first blade root load parameter can be corrected using the predicted correction amount to obtain the predicted blade root load.

For ease of understanding, the process of obtaining a predicted blade root load is illustrated in the following as an example of a blade root load parameter including a blade root edgewise direction load and a blade root flapwise direction load, and as an example of a blade root load parameter including a blade root load.

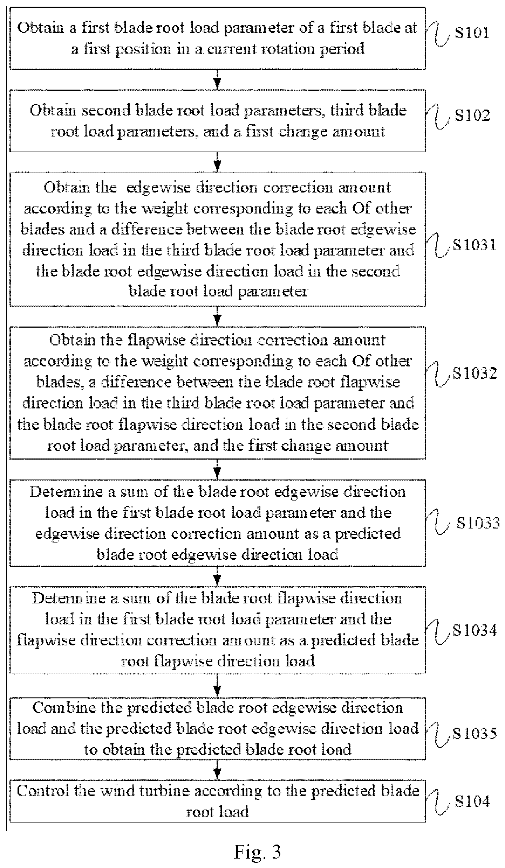

In this embodiment, the blade root load parameter include a blade root edgewise direction load and a blade root flapwise direction load, and correspondingly, the predicted correction amount includes an edgewise direction correction amount and a flapwise direction correction amount. Fig. 3 is a flowchart of a method for controlling a wind turbine provided in another embodiment of the present application. Fig. 3 differs from Fig. 1 in that step S103 shown in Fig. 1 can be specifically refined into steps S1031 to S1035 shown in Fig. 3.

In step S1031, the edgewise direction correction amount is obtained according to the weight corresponding to each of other blades and a difference between the blade root edgewise direction load in the third blade root load parameter and the blade root edgewise direction load in the second blade root load parameter.

A sum of the weights corresponding to the other blades may be 1. The edgewise direction correction amount is a correction amount of a predicted blade root edgewise direction load. For example, the wind turbine has three blades, respectively a first blade, a second blade, and a third blade, where the second blade and the third blade are other blades. The edgewise direction correction amount can be obtained according to equation (1) below: $Δ Mx 1 = k ⋅ \left({\left.{Mx}_{2}\right|}_{α + Δ α}-{\left.{Mx}_{2}\right|}_{α}\right) + \left(1-k\right) \left({\left.{Mx}_{3}\right|}_{α + Δ α}-{\left.{Mx}_{3}\right|}_{α}\right)$ (1)

Here, Δ*Mx*1 represents the edgewise direction correction amount; *k* represents a weight corresponding to the second blade; (1 - *k*) represents a weight of the third blade; *Mx*₂|_{*α+*Δ*α*} represents a blade root edgewise direction load in the third blade root load parameter of the second blade; *Mx*₂|*_{α}* represents a blade root edgewise direction load in the second blade root load parameter of the second blade; *Mx*₃|_{*α*+Δ*α*} represents a blade root edgewise direction load in the third blade root load parameter of the third blade; *Mx*₃|*_{α}* represents a blade root edgewise direction load in the second blade root load parameter of the third blade; *α* represents the first position; and *α +* Δ*α* represents the second position.

The main component of the blade root edgewise direction load is gravity acting on the blade root, which is manifested as relatively stable and approximately equal amplitude fluctuations with low mean and slow changes. Therefore, the edgewise direction correction amount obtained according to the blade root edgewise direction load in the second blade root load parameter and the blade root edgewise direction load in the third blade root load parameter is relatively accurate and does not increase the first change amount.

In step S1032, the flapwise direction correction amount is obtained according to the weight corresponding to each of other blades, a difference between the blade root flapwise direction load in the third blade root load parameter and the blade root flapwise direction load in the second blade root load parameter, and the first change amount.

The flapwise direction correction amount is a correction amount of a predicted blade root flapwise direction load. For example, the wind turbine has three blades, respectively a first blade, a second blade, and a third blade, where the second blade and the third blade are other blades. The flapwise direction correction amount can be obtained according to equation (2) below: $Δ My 1 = k ⋅ \left({\left.{My}_{2}\right|}_{α + Δ α}-{\left.{My}_{2}\right|}_{α}\right) + \left(1-k\right) \left({\left.{My}_{3}\right|}_{α + Δ α}-{\left.{My}_{3}\right|}_{α}\right) + Δ M$ (2)

Here, Δ*My*1 represents the flapwise direction correction amount; *k* represents the weight corresponding to the second blade; (1 - *k*) represents the weight of the third blade; *My*₂|_{*α*+Δ*α*} represents a blade root flapwise direction load in the third blade root load parameter of the second blade; *Mx*₂|*_{α}* represents a blade root flapwise direction load in the second blade root load parameter of the second blade; *Mx*₃|_{*α*+Δ*α*} represents a blade root flapwise direction load in the third blade root load parameter of the third blade; *Mx*₃|*_{α}* represents a blade root flapwise direction load in the second blade root load parameter of the third blade; *α* represents the first position; *α +* Δ*α* represents the second position; and Δ*M* represents the first change amount.

Because the main component of the blade root flapwise direction load is aerodynamic force acting on the blade, a sum of blade root flapwise direction loads acting on the blades in the wind turbine can be equivalent to power acting on the impeller. The mean value of the blade root flapwise direction loads is large, and changes faster than the mean value of the blade root edgewise direction loads with affected by multiple factors such as wind speed and pitch angle. For example, in the event of a gust, the mean value of the blade root flapwise direction loads changes fast. If the flapwise direction correction amount is obtained only according to the blade root flapwise direction load in the second blade root load parameter and the blade root flapwise direction load in the third blade root load parameter, the flapwise direction correction amount is smaller, since the blade root flapwise direction load in the second blade root load parameter and the blade root flapwise direction load in the third blade root load parameter are the data before the gust and are smaller than the blade root flapwise direction loads in the current rotation period. As a result, the predicted blade root flapwise direction load obtained according to the flapwise direction correction amount and the final predicted blade root load are smaller, and the predicted blade root load lags and cannot satisfy the prediction effect. Therefore, the first change amount is introduced to compensate for the error caused by the smaller flapwise direction correction amount, to eliminate the lag.

In step S1033, a sum of the blade root edgewise direction load in the first blade root load parameter and the edgewise direction correction amount is determined as a predicted blade root edgewise direction load.

For example, if the edgewise direction correction amount is shown in equation (1) above, the predicted blade root edgewise direction load can be obtained according to equation (3) below: ${\left.{Mx}_{1}\right|}_{α + Δ α} = {\left.{Mx}_{1}\right|}_{α} + Δ Mx 1$ (3)

Here, *Mx*₁|_{*+*Δ*α*} represents the predicted blade root edgewise direction load of the first blade; *Mx*₁|*_{α}* represents the blade root edgewise direction load in the first blade root load of the first blade; and Δ*Mx*1 represents the edgewise direction correction amount.

In step S1034, a sum of the blade root flapwise direction load in the first blade root load parameter and the flapwise direction correction amount is determined as a predicted blade root flapwise direction load.

For example, if the flapwise direction correction amount is shown in equation (2) above, the predicted blade root flapwise direction load can be obtained according to equation (4) below: ${\left.{My}_{1}\right|}_{α + Δ α} = {\left.{My}_{1}\right|}_{α} + Δ My 1$ (4)

Here, *My₁*|_{*α*+Δ*α*} represents the predicted blade root flapwise direction load of the first blade; *My*₁|*_{α}* represents the blade root flapwise direction load in the first blade root load of the first blade; and Δ*My*1 represents the flapwise direction correction amount.

In step S1035, the predicted blade root edgewise direction load and the predicted blade root flapwise direction load are combined to obtain the predicted blade root load.

For example, if the predicted blade root edgewise direction load and the predicted blade root flapwise direction load are respectively shown in equations (3) and (4) above, the predicted blade root load can be obtained according to equation (5) below: ${M}_{x y} = \sqrt{M {x}_{1} \left|{{}_{α + \text{Δ} α}}^{2} + M {y}_{1} \left|{{}_{α + \text{Δ} α}}^{2}\right.\right.}$ (5)

Here, *M_{xy}* represents the predicted blade root load; *Mx*₁|_{*α*+Δ*α*} represents the predicted blade root edgewise direction load of the first blade; and *My*₁|*_{α}* represents the predicted blade root flapwise direction load of the first blade.

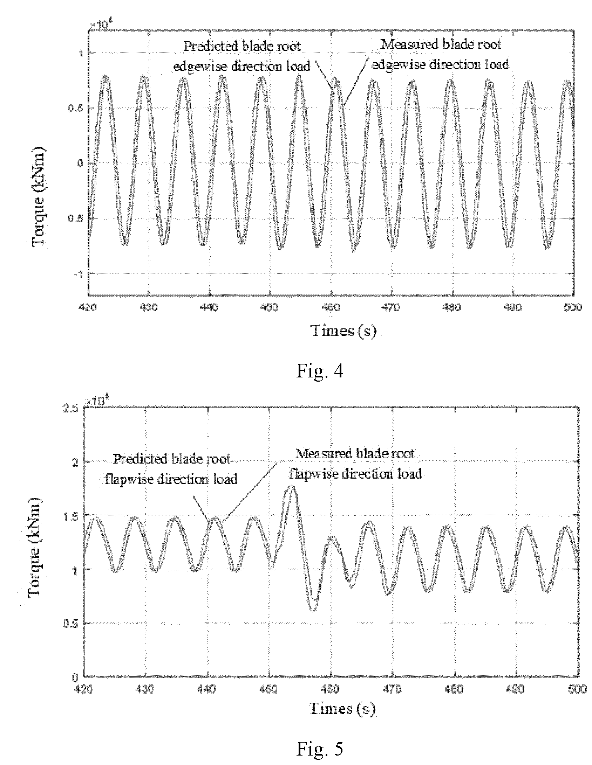

To explain the accuracy of the predicted blade root edgewise direction load and the predicted blade root flapwise direction load in embodiments of the present application, when the first blade reaches the second position in the current rotation period, a blade root edgewise direction load and a blade root flapwise direction load are collected to obtain a measured blade root edgewise direction load and a measured blade root flapwise direction load of the first blade at the second position in the current rotation period. Fig. 4 is a schematic view of comparison between a predicted blade root edgewise direction load and a measured blade root edgewise direction load obtained in an embodiment of the present application, and Fig. 5 is a schematic view of comparison between a predicted blade root flapwise direction load and a measured blade root flapwise direction load obtained in an embodiment of the present application, where the horizontal axis presents time in seconds (s), the vertical axis represents torque in kilonewton meters (kNm), and the torque can reflect the blade root load. As shown in Fig. 4, the predicted blade root edgewise direction load has certain phase advance compared to the measured blade root edgewise direction load, the amplitude error between the predicted blade root edgewise direction load and the measured blade root edgewise direction load is very small, and the predicted blade root edgewise direction load and the measured blade root edgewise direction load can basically achieve consistency. Similarly, as shown in Fig. 5, the predicted blade root flapwise direction load has certain phase advance compared to the measured blade root flapwise direction load, the amplitude error between the predicted blade root flapwise direction load and the measured blade root flapwise direction load is very small, and the predicted blade root flapwise direction load and the measured blade root flapwise direction load can basically achieve consistency. Correspondingly, as shown in Fig. 2, the predicted blade root load obtained by combining the predicted blade root edgewise direction load and the predicted blade root flapwise direction load has certain phase advance compared to the measured blade root load, the amplitude error is very small, and the predicted blade root load and the measured blade root load can basically achieve consistency.

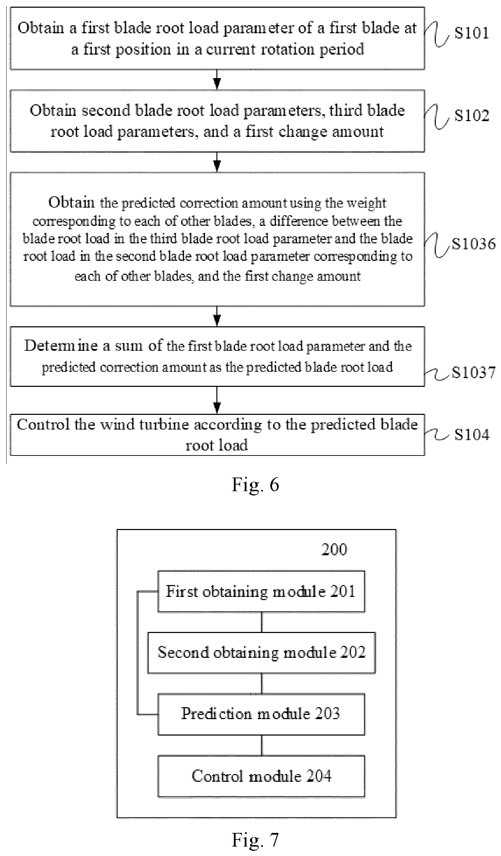

In this embodiment, the blade root load parameter includes a blade root load. Fig. 6 is a flowchart of a method for controlling a wind turbine provided in still another embodiment of the present application. Fig. 6 differs from Fig. 1 in that step S103 shown in Fig. 1 can be specifically refined into steps S1036 and S1037 shown in Fig. 3.

In step S1036, a predicted correction amount is obtained using the weight corresponding to each of other blades, a difference between the blade root load in the third blade root load parameter and the blade root load in the second blade root load parameter corresponding to each of other blades, and the first change amount.

The predicted correction amount is a correction amount of the blade root load that is obtained by prediction. For example, the wind turbine has three blades, respectively a first blade, a second blade, and a third blade, where the second blade and the third blade are other blades. The predicted correction amount can be obtained according to equation (6) below: $Δ Mxy 1 = k ⋅ \left({\left.{Mxy}_{2}\right|}_{α + Δ α}-{\left.{Mxy}_{2}\right|}_{α}\right) + \left(1-k\right) \left({\left.{Mxy}_{3}\right|}_{α + Δ α}-{\left.{Mxy}_{3}\right|}_{α}\right) + Δ M$ (6)

Here, Δ*Mxy*1 represents the predicted correction amount; *k* represents the weight corresponding to the second blade; (1 - k) represents the weight of the third blade; *Mxy*₂^{|}_{*α*+Δ*α*} represents a blade root load in the third blade root load parameter of the second blade; *Mxy*₂|*_{α}* represents a blade root load in the second blade root load parameter of the second blade; *Mxy*₃|_{α*+*Δ*α*} represents a blade root load in the third blade root load parameter of the third blade; *Mxy*₃|*_{α}* represents a blade root load in the second blade root load parameter of the third blade; *α* represents the first position; *α +* Δ*α* represents the second position; and Δ*M* represents the first change amount.

In S1037, a sum of the first blade root load parameter and the predicted correction amount is determined as the predicted blade root load.

For example, if the predicted correction amount is shown in equation (6) above, the predicted blade root load can be obtained according to equation (7) below: ${M}_{xy} = {\left.{Mxy}_{1}\right|}_{α} + Δ Mxy 1$ (7)

Here, *M_{xy}* represents the predicted blade root load; *Mxy*₁|*_{α}* represents the blade root load in the first blade root load parameter of the first blade; and Δ*Mxy*1 represents the predicted correction amount.

In some embodiments, a rotation torque parameter of the first blade at the second position in the current rotation period can be predicted according to a rotation torque parameter of the first blade at the first position in the current rotation period, a change amount of the rotation torque parameter of the first blade before reaching the first position, and predicted duration when the first blade is from the first position to the second position in the current rotation period; and the first change amount is obtained based on the rotation torque parameter of the first blade at the first position in the current rotation period and the rotation torque parameter of the first blade at the second position in the current rotation period. The change amount of the rotation torque parameter of the first blade before reaching the first position can be calculated according to a differential of a rotation torque of the first blade before reaching the first position. For example, differential calculation is performed according to a rotation torque parameter of the first blade at a position before the first position in the current rotation period and duration from the position to the first position, to obtain the change amount of the rotation torque parameter of the first blade before reaching the first position. For example, the first change amount can be calculated according to equations (8) and (9): $a \left|\approx t + Δ ta\left|+ t\frac{a \left|- ta\left|{}_{t - dt}\right.\right.}{dt}⋅Δt\right.\right.$ (8) $Δ M = {\left.M\right|}_{t + Δ t} - {\left.M\right|}_{t} = {K}_{I} ⋅ \left({\left.a\right|}_{t + Δ t}-{\left.a\right|}_{t}\right)$ (9)

Here, *a*|_{*t*+Δ*t*} represents the predicted rotation torque parameter of the first blade at the second position in the current rotation period; t may represent a time when the first blade is at the first position in the current rotation period; *t* + Δ*t* represents a time when the first blade is at the second position in the current rotation period; Δ*t* represents the predicted duration when the first blade is from the first position to the second position in the current rotation period; *a*|*ₜ* represents the rotation torque parameter of the first blade at the first position in the current rotation period; $\frac{{\left.a\right|}_{t} - {\left.a\right|}_{t - dt}}{dt}$ represents a differential of the rotation torque parameter; *t - dt* represents a time when the first blade reaches a position before the first position; *dt* represents a time interval of using the differential, which can be regarded as duration required when the first blade reaches the first position from the position before the first position; *K_{I}* represents a conversion coefficient between the rotation torque parameter and the first change amount, which can be calculated according to inertias of the blades, a hub, and a main axle system; *M*|*ₜ* represents the blade root load, blade root edgewise direction load or blade root flapwise direction load of the first blade at the first position in the current rotation period; *M*|_{*t+*Δ*t*} represents the predicted blade root load, blade root edgewise direction load or blade root flapwise direction load of the first blade at the second position in the current rotation period; and Δ*M* represents the first change amount.

The rotation torque parameter in the above embodiment may include an impeller acceleration, a spindle rotation direction torque, or a wind speed. The wind speed may be a measured wind speed or an equivalent wind speed, which is not limited here. In some examples, when the rotation torque parameter includes the wind speed, equation (9) above can be obtained by fitting the wind speed and the blade root load (or blade root flapwise direction load).

In some embodiments, if the wind turbine is provided with sensors capable of directly obtaining positions of the blades such as azimuths, the first position and the second position can be directly obtained, and data such as the first blade root load parameter, the second blade root load parameters, and the third blade root load parameters can be correspondingly collected. If the wind turbine is not provided with sensors capable of directly obtaining positions of the blades, the positions of the blades can be determined using the impeller speed and time, to obtain data such as the first blade root load parameter, the second blade root load parameters, and the third blade root load parameters.

First time when the other blades are at the first position and second time when the other blades are at the second position in the previous rotation period can be determined based on the predicted duration when the first blade is from the first position to the second position in the current rotation period, a calculation relationship between a position and an impeller speed, an impeller speed at which the first blade is at the first position in the current rotation period, and a fixed position difference between the blades; and the blade root load parameters of the other blades at the first time and the second time are determined as the second blade root load parameters and the third blade root load parameters respectively.

A position difference between the first position and the second position can be preset, the position of the first blade at the current time can be determined as the first position, and a sum of the first position and the position difference can be designated as the second position. Duration when the first blade is from the first position to the second position in the current rotation period can be predicted according to the impeller speed and the position difference, and the predicted duration when the first blade is from the first position to the second position in the current rotation period can be designated as duration when the other blades are from the first position to the second position in a rotation period to calculate. The first time and the second time corresponding to the other blades can be calculated according to the impeller speed and the fixed position difference between the blades, so as to determine and obtain the second blade root load parameters and the third blade root load parameters according to the time.

For example, the position of the first blade at a time in the current rotation period can be determined as the first position, the first position is designated as 0, the duration from the first position to the second position is set using the impeller speed and a time-position integral calculation relationship, and the second position is calculated using equation $α = {\int }_{t 0}^{t} v dt$ *,* where *t*0 represents the time when the first blade is in the current rotation period; *v* represents the impeller speed; t represents time; and α represents a position, such as an azimuth. Then, the second blade root load parameters and the third blade root load parameters are obtained according to the obtained second position to calculate the predicted blade root load.

For example, the first blade root load parameter, the second blade root load parameters, and the third blade root load parameters are obtained according to the time when the first blade is at the first position in the current rotation period, and the calculated first time and second time. Equations (1) to (7) above can be converted into equations (10) to (16) below, respectively: $\begin{matrix}Δ Mx 1 = k ⋅ \left({Mx}_{2}\left|- t 2 + Δ t 2{Mx}_{2}\left|{}_{t}\right.\right.\right) + \left(1-k\right) \left({Mx}_{3}\left|- t 3 + Δ t 3{Mx}_{3}\left|{}_{t 3}\right.\right.\right) \left(10\right) \\ Δ My 1 = k ⋅ \left({My}_{2}\left|- t 2 + Δ t 2{My}_{2}\left|{}_{t}\right.\right.\right) + \left(1-k\right) \left({My}_{3}\left|- t 3 + Δ t 3{My}_{3}\left|{}_{t 3}\right.\right.\right) + Δ M \left(11\right)\end{matrix}$ ${Mx}_{1} \left|{}_{t + Δ t}\right. = {Mx}_{1} \left|{}_{t}\right. + Δ Mx 1$ (12) ${My}_{1} \left|{}_{t + Δ t}\right. = {My}_{1} \left|{}_{t}\right. + Δ My 1$ (13) ${M}_{x y} = \sqrt{M {x}_{1} \left|{{}_{t + \text{Δ} t}}^{2} + M {y}_{1} \left|{{}_{t + \text{Δ} t}}^{2}\right.\right.}$ (14) $\begin{matrix}Δ Mxy 1 = k ⋅ \left({Mxy}_{2}\left|- t 2 + Δ t 2{Mxy}_{2}\left|{}_{t 2}\right.\right.\right) + \left(1-k\right) \left({Mxy}_{3}\left|- t 3 + Δ t 3{Mxy}_{3}\left|{}_{t 3}\right.\right.\right) + \\ Δ M\end{matrix}$ (15) ${M}_{xy} = {\left.{Mxy}_{1}\right|}_{t} + Δ Mxy 1$ (16)

Here, *Mx*₂|_{*t*2*+*Δ*t*2} represents the blade root edgewise direction load in the third blade root load parameter of the second blade; *Mx*₂|*ₜ* represents the blade root edgewise direction load in the second blade root load parameter of the second blade; *Mx₃*|_{*t3+*Δ*t3*} represents the blade root edgewise direction load in the third blade root load parameter of the third blade; *Mx₃*|*ₜ₃* represents the blade root edgewise direction load in the second blade root load parameter of the third blade; t2 represents the first time corresponding to the second blade; *t2* + *Δt2* represents the second time corresponding to the second blade; t3 represents the first time corresponding to the third blade; *t*3 + *Δt*3 represents the second time corresponding to the third blade; *My*₂|_{*t*2+Δ*t*2} represents the blade root flapwise direction load in the third blade root load parameter of the second blade; *My*₂|*ₜ* represents the blade root flapwise direction load in the second blade root load parameter of the second blade; *My*₃|_{*t*3+Δ*t*3} represents the blade root flapwise direction load in the third blade root load parameter of the third blade; *My*₃|_{*t*3} represents the blade root flapwise direction load in the second blade root load parameter of the third blade; *Mx*₁|_{*t*+Δ*t*} represents the predicted blade root edgewise direction load of the first blade; *Mx*₁|*ₜ* represents the blade root edgewise direction load in the first blade root load of the first blade; *My*₁|_{*t+*Δ*t*} represents the predicted blade root flapwise direction load of the first blade; *My*₁|*ₜ* represents the blade root flapwise direction load in the first blade root load of the first blade; *Mxy*₂|_{*t*2+Δ*t*2} represents the blade root load in the third blade root load parameter of the second blade; *Mxy*₂|_{*t*2} represents the blade root load in the second blade root load parameter of the second blade; *Mxy*₃|_{*t*3+Δ*t*3} represents the blade root load in the third blade root load parameter of the third blade; *Mxy*₃|_{*t*3} represents the blade root load in the second blade root load parameter of the third blade; and other parameters that are the same as those in equations (1) to (7) will not be repeated here. Here, *Δt, Δt2,* and *Δt3* may be equal.

The impeller speed and time is equivalent to the positions, the flexibility and applicability of the method for controlling a wind turbine in embodiments of the present application can be improved, and the application scenario of the method for controlling a wind turbine can be expanded.

A second aspect of the present application provides an apparatus for controlling a wind turbine. Fig. 7 is a schematic structural view of an apparatus for controlling a wind turbine provided in an embodiment of the present application. As shown in Fig. 7, the apparatus for controlling a wind turbine 200 may include a first obtaining module 201, a second obtaining module 202, a prediction module 203, and a control module 204.

The first obtaining module 201 may be configured to obtain a first blade root load parameter of a first blade at a first position in a current rotation period.

The second obtaining module 202 may be configured to obtain second blade root load parameters, third blade root load parameters, and a first change amount.

The second blade root load parameters include blade root load parameters of other blades at the first position in a previous rotation period. The third blade root load parameters include blade root load parameters of the other blades at a second position that is later than the first position to reach in the previous rotation period. The first change amount represents a change trend of blade root load parameters of blades from the first position to the second position.

The prediction module 203 may be configured to obtain a predicted blade root load of the first blade at the second position in the current rotation period based on the first blade root load parameter, the second blade root load parameters, the third blade root load parameters, and the first change amount.

The control module 204 may be configured to control the wind turbine according to the predicted blade root load.

In embodiments of the present application, a blade root load of the first blade at a position where the blade has currently not reached, namely, the second position, in the current rotation period is predicted according to the first blade root load parameter, the second blade root load parameters, the third blade root load parameters, and the first change amount. The first blade root load parameter includes a blade root load parameter of the first blade at the first position in the current rotation period, the second blade root load parameters include blade root load parameters of other blades at the first position in a previous rotation period, and the third blade root load parameters include blade root load parameters of the other blades at the second position in the previous rotation period. The first blade root load parameter can provide a basis of a blade root load in the current rotation period, the second blade root load parameters and the third blade root load parameters can provide blade root loads of the blades at the first position and the second position in the previous rotation period, and the first change amount represents a change trend of blade root load parameters from the first position to the second position, which can compensate for a possible deviation between the blade root load in the previous rotation period and the blade root load in the current rotation period, thereby eliminating the lag of the predicted blade root load and improving the accuracy of the predicted blade root load. By controlling the wind turbine according to the accurate predicted blade root load, the control on the wind turbine can be started in advance, thereby making the control more stably, reducing safety risks of the blade root load on the wind turbine, and improving the safety of the wind turbine.

In some embodiments, the prediction module 203 may be configured to: obtain a predicted correction amount using a weight corresponding to each of other blades, the second blade root load parameter and third blade root load parameter corresponding to each of other blades, and the first change amount; and determine the predicted blade root load according to the first blade root load parameter and the predicted correction amount.

In some examples, the blade root load parameter includes a blade root edgewise direction load and a blade root flapwise direction load, and the predicted correction amount includes an edgewise direction correction amount and a flapwise direction correction amount.

The prediction module 203 may be configured to: obtain the edgewise direction correction amount according to the weight corresponding to each of other blades and a difference between the blade root edgewise direction load in the third blade root load parameter and the blade root edgewise direction load in the second blade root load parameter; and obtain the flapwise direction correction amount according to the weight corresponding to each of other blades, a difference between the blade root flapwise direction load in the third blade root load parameter and the blade root flapwise direction load in the second blade root load parameter, and the first change amount.

The prediction module 203 may be configured to: determine a sum of the blade root edgewise direction load in the first blade root load parameter and the edgewise direction correction amount as a predicted blade root edgewise direction load; determine a sum of the blade root flapwise direction load in the first blade root load parameter and the flapwise direction correction amount as a predicted blade root flapwise direction load; and combine the predicted blade root edgewise direction load and the predicted blade root flapwise direction load to obtain the predicted blade root load.

In some examples, the blade root load parameter includes a blade root load.

The prediction module 203 may be configured to: obtain the predicted correction amount using the weight corresponding to each of other blades, a difference between the blade root load in the third blade root load parameter and the blade root load in the second blade root load parameter corresponding to each of other blades, and the first change amount.

The prediction module 203 may be configured to: determine a sum of the first blade root load parameter and the predicted correction amount as the predicted blade root load.

In some embodiments, the second obtaining module 202 may be configured to: predict a rotation torque parameter of the first blade at the second position in the current rotation period according to a rotation torque parameter of the first blade at the first position in the current rotation period, a change amount of the rotation torque parameter of the first blade before reaching the first position, and predicted duration when the first blade is from the first position to the second position in the current rotation period; and obtain the first change amount based on the rotation torque parameter of the first blade at the first position in the current rotation period and the rotation torque parameter of the first blade at the second position in the current rotation period.

In some embodiments, the second obtaining module 202 may be configured to: determine first time when the other blades are at the first position and second time when the other blades are at the second position in the previous rotation period based on the predicted duration when the first blade is from the first position to the second position in the current rotation period, a calculation relationship between a position and an impeller speed, an impeller speed at which the first blade is at the first position in the current rotation period, and a fixed position difference between the blades; and determine the blade root load parameters of the other blades at the first time and the second time as the second blade root load parameters and the third blade root load parameters respectively.

In some examples, the rotation torque parameter may include, but is not limited to, an impeller acceleration, a spindle rotation direction torque, or a wind speed.

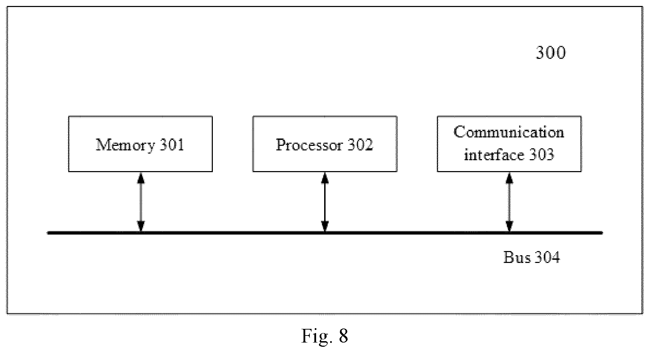

A third aspect of the present application provides a controller for a wind turbine. Fig. 8 is a schematic structural view of a controller for a wind turbine provided in an embodiment of the present application. As shown in Fig. 8, the controller for a wind turbine 300 includes a memory 301, a processor 302, and a computer program stored in the memory 301 and executable on the processor 302.

In some examples, the processor 302 may be a central processing unit (CPU) or an application specific integrated circuit (ASIC), or may be configured to implement one or more integrated circuits in embodiments of the present application.

The memory 301 may be a read-only memory (ROM), a random access memory (RAM), a magnetic disk storage medium device, an optical storage medium device, a flash memory device, or an electrical, optical, or other physical/tangible memory device. Therefore, typically, the memory includes one or more tangible (non-transient) computer-readable storage media (such as memory devices) encoded with software including computer executable instructions, and the software, when executed (for example, by one or more processors), can perform the operation described with reference to the method for controlling a wind turbine in embodiments of the present application.

The processor 302 reads the executable program code stored in the memory 301 to run the computer program corresponding to the executable program code, so as to implement the method for controlling a wind turbine in the above embodiments.

In some examples, the controller for a wind turbine 300 may further include a communication interface 303 and a bus 304. As shown in Fig. 8, the memory 301, the processor 302, and the communication interface 303 are connected and communicate with each other through the bus 304.

The communication interface 303 is mainly configured to implement communication between various modules, apparatuses, units, and/or devices in embodiments of the present application. Input and/or output devices can also be connected through the communication interface 303.

The bus 304 includes hardware, software, or both, to couple the components of the controller for a wind turbine 300 together. By way of example and not limitation, the bus 304 may be an accelerated graphics port (AGP) or other graphics bus, an enhanced industry standard architecture (EISA) bus, a front side bus (FSB), a hyper transport (HT) interconnect, an industry standard architecture (ISA) bus, an infinite bandwidth interconnect, a low pin count (LPC) bus, a memory bus, a micro channel architecture (MCA) bus, a peripheral component interconnect (PCI) bus, a PCI-Express (PCI-E) bus, a serial advanced technology attachment (SATA) bus, a video electronics standards association local (VLB) bus, or any other suitable bus, or a combination of two or more of the above. Where appropriate, the bus 304 may include one or more buses. Although the embodiment of the present application describes and shows a specific bus, the present application considers any suitable bus or interconnect.

A fourth aspect of the present application provides a wind turbine, which includes the controller for a wind turbine in the above embodiment and can achieve the same technical effects, which will not be repeated here in order to avoid repetition.

An embodiment of the present application further provides a computer-readable storage medium, storing computer program instructions that, when executed by a processor, can implement the method for controlling a wind turbine in the above embodiments and achieve the same technical effects, which will not be repeated here in order to avoid repetition. The computer-readable storage medium may be a non-transient computer-readable storage medium, such as a read-only memory (ROM), a random access memory (RAM), a magnetic disk, or an optical disk.

It should be noted that the various embodiments in this specification are described in a progressive manner, the same or similar parts between the various embodiments may refer to each other, and each embodiment focuses on the differences from other embodiments. For embodiments of the apparatus, the controller, the wind turbine, and the computer-readable storage medium, relevant parts can refer to the description section of embodiments of the method. The present application is not limited to the specific steps and structures described above and shown in the figures. Those skilled in the art can make various changes, modifications, and additions, or change the order of steps after understanding the spirit of the present application. And, for the sake of simplicity, detailed descriptions of known methods and technologies are omitted here.

The above describes various aspects of the present application with reference to the flowchart and/or block diagram of the method, apparatus (system), and computer program product according to embodiments of the present application. It should be understood that each box in the flowchart and/or block view and a combination of boxes in the flowchart and/or block view can be implemented by computer program instructions. These computer program instructions can be provided to a processor of a general-purpose computer, a dedicated computer, or other programmable data processing apparatuses to produce a machine, which enables the instructions executed by the processor of the computer or other programmable data processing apparatuses to implement the functions/actions specified in one or more boxes of the flowchart and/or block view. Such a processor may be, but is not limited to a general-purpose processor, a dedicated processor, a special application processor, or a field programmable logic circuit. It can also be understood that each box in the block view and/or flowchart and a combination of boxes in the block view and/or flowchart can be implemented by dedicated hardware that executes specified functions or actions, or by a combination of dedicated hardware and computer instructions.

Those skilled in the art should understand that the above embodiments are all illustrative but not restrictive. Different technical features appearing in different embodiments can be combined to achieve beneficial effects. Those skilled in the art should be able to understand and implement other modified embodiments of the disclosed embodiments after studying the drawings, description, and claims. In the claims, the term "comprise" does not exclude other apparatuses or steps; the quantifier "one" does not exclude more; and the terms "first" and "second" are used to denote names rather than to indicate any specific order. Any reference numerals in the claims should not be construed as limiting the scope of protection. The functions of a plurality of portions appearing in the claims can be implemented by a single hardware or software module. The appearance of some technical features in different dependent claims does not mean that these technical features cannot be combined to achieve beneficial effects.

## Claims

1. A method for controlling a wind turbine, comprising:
obtaining (S101) a first blade root load parameter of a first blade at a first position in a current rotation period;
obtaining (S102) second blade root load parameters, third blade root load parameters, and a first change amount, wherein the second blade root load parameters comprise blade root load parameters of other blades at the first position in a previous rotation period, the third blade root load parameters comprise blade root load parameters of the other blades at a second position that is later reached than the first position in the previous rotation period, and the first change amount represents a change trend of blade root load parameters of blades from the first position to the second position;
obtaining (S103) a predicted blade root load of the first blade at the second position in the current rotation period based on the first blade root load parameter, the second blade root load parameters, the third blade root load parameters, and the first change amount; and
controlling (S104) the wind turbine according to the predicted blade root load.

2. The method according to claim 1, wherein the obtaining a predicted blade root load of the first blade at the second position in the current rotation period based on the first blade root load parameter, the second blade root load parameters, the third blade root load parameters, and the first change amount comprises:
obtaining (S1036) a predicted correction amount using a weight corresponding to each other blade, the second blade root load parameter and third blade root load parameter corresponding to each other blade, and the first change amount; and
determining (S1037) the predicted blade root load according to the first blade root load parameter and the predicted correction amount.

3. The method according to claim 1, wherein obtaining the first change amount comprises:
predicting a rotation torque parameter of the first blade at the second position in the current rotation period according to a rotation torque parameter of the first blade at the first position in the current rotation period, a change amount of the rotation torque parameter of the first blade before reaching the first position, and predicted duration when the first blade is from the first position to the second position in the current rotation period; and
obtaining the first change amount based on the rotation torque parameter of the first blade at the first position in the current rotation period and the rotation torque parameter of the first blade at the second position in the current rotation period.

4. The method according to claim 1, wherein obtaining the second blade root load parameters and the third blade root load parameters comprises:
determining first time when the other blades are at the first position and second time when the other blades are at the second position in the previous rotation period based on the predicted duration when the first blade is from the first position to the second position in the current rotation period, a calculation relationship between a position and an impeller speed, an impeller speed at which the first blade is at the first position in the current rotation period, and a fixed position difference between the blades; and
determining the blade root load parameters of the other blades at the first time and the second time as the second blade root load parameters and the third blade root load parameters respectively.

5. The method according to claim 2, wherein the blade root load parameter comprises a blade root edgewise direction load and a blade root flapwise direction load, the predicted correction amount comprises an edgewise direction correction amount and a flapwise direction correction amount,
the obtaining a predicted correction amount using a weight corresponding to each other blade, the second blade root load parameter and third blade root load parameter corresponding to each other blade, and the first change amount comprises:
obtaining the edgewise direction correction amount according to the weight corresponding to each other blade and a difference between the blade root edgewise direction load in the third blade root load parameter and the blade root edgewise direction load in the second blade root load parameter; and
obtaining the flapwise direction correction amount according to the weight corresponding to each other blade, a difference between the blade root flapwise direction load in the third blade root load parameter and the blade root flapwise direction load in the second blade root load parameter, and the first change amount.

6. The method according to claim 5, wherein the determining the predicted blade root load according to the first blade root load parameter and the predicted correction amount comprises:
determining a sum of the blade root edgewise direction load in the first blade root load parameter and the edgewise direction correction amount as a predicted blade root edgewise direction load;
determining a sum of the blade root flapwise direction load in the first blade root load parameter and the flapwise direction correction amount as a predicted blade root flapwise direction load; and
combining the predicted blade root edgewise direction load and the predicted blade root flapwise direction load to obtain the predicted blade root load.

7. The method according to claim 2, wherein the blade root load parameter comprises a blade root load,
the obtaining a predicted correction amount using a weight corresponding to each other blade, the second blade root load parameter and third blade root load parameter corresponding to each other blade, and the first change amount comprises:
obtaining the predicted correction amount using the weight corresponding to each other blade, a difference between the blade root load in the third blade root load parameter and the blade root load in the second blade root load parameter corresponding to each other blade, and the first change amount;
the determining the predicted blade root load according to the first blade root load parameter and the predicted correction amount comprises:
determining a sum of the first blade root load parameter and the predicted correction amount as the predicted blade root load.

8. The method according to claim 3, wherein the rotation torque parameter comprises an impeller acceleration, a spindle rotation direction torque, or a wind speed.

9. An apparatus for controlling a wind turbine, comprising:
a first obtaining module (201), configured to obtain a first blade root load parameter of a first blade at a first position in a current rotation period;
a second obtaining module (202), configured to obtain second blade root load parameters, third blade root load parameters, and a first change amount, the second blade root load parameters comprising blade root load parameters of other blades at the first position in a previous rotation period, the third blade root load parameters comprising blade root load parameters of the other blades at a second position that is later reached than the first position in the previous rotation period, and the first change amount representing a change trend of blade root load parameters of blades from the first position to the second position;
a prediction module (203), configured to obtain a predicted blade root load of the first blade at the second position in the current rotation period based on the first blade root load parameter, the second blade root load parameters, the third blade root load parameters, and the first change amount; and
a control module (204), configured to control the wind turbine according to the predicted blade root load.

10. A controller for a wind turbine, comprising: a processor (302) and a memory (301) storing computer program instructions,
wherein the processor (302) implements the method for controlling a wind turbine according to any one of claims 1 to 8 when executing the computer program instructions.

11. A wind turbine, comprising the controller for a wind turbine according to claim 10.

## Patentansprüche

1. Verfahren zum Steuern einer Windturbine, umfassend:
Erhalten (S101) eines ersten Rotorblattwurzel-Lastparameters eines ersten Rotorblatts an einer ersten Position in einer aktuellen Umdrehungsperiode;
Erhalten (S102) zweiter Rotorblattwurzel-Lastparameter, dritter Rotorblattwurzel-Lastparameter und einer ersten Änderungsgröße, wobei die zweiten Rotorblattwurzel-Lastparameter Rotorblattwurzel-Lastparameter anderer Rotorblätter an der ersten Position in einer vorhergehenden Umdrehungsperiode umfassen, die dritten Rotorblattwurzel-Lastparameter Rotorblattwurzel-Lastparameter der anderen Rotorblätter an einer zweiten Position umfassen, die später als die erste Position in der vorhergehenden Umdrehungsperiode erreicht wird, und die erste Änderungsgröße einen Änderungstrend von Rotorblattwurzel-Lastparametern von Rotorblättern von der ersten Position zu der zweiten Position darstellt;
Erhalten (S103) einer vorhergesagten Rotorblattwurzel-Last des ersten Rotorblatts an der zweiten Position in der aktuellen Umdrehungsperiode auf der Grundlage des ersten Rotorblattwurzel-Lastparameters, der zweiten Rotorblattwurzel-Lastparameter, der dritten Rotorblattwurzel-Lastparameter und der ersten Änderungsgröße; und
Steuern (S104) der Windturbine nach der vorhergesagten Rotorblattwurzel-Last.

2. Verfahren nach Anspruch 1, wobei das Erhalten einer vorhergesagten Rotorblattwurzel-Last des ersten Rotorblatts an der zweiten Position in der aktuellen Umdrehungsperiode auf der Grundlage des ersten Rotorblattwurzel-Lastparameters, der zweiten Rotorblattwurzel-Lastparameter, der dritten Rotorblattwurzel-Lastparameter und der ersten Änderungsgröße Folgendes umfasst:
Erhalten (S1036) einer vorhergesagten Korrekturgröße unter Verwendung eines jedem anderen Rotorblatt entsprechenden Gewichtungsfaktors, des jedem anderen Rotorblatt entsprechenden zweiten Rotorblattwurzel-Lastparameters und dritten Rotorblattwurzel-Lastparameters und der ersten Änderungsgröße; und
Bestimmen (S1037) der vorhergesagten Rotorblattwurzel-Last nach dem ersten Rotorblattwurzel-Lastparameter und der vorhergesagten Korrekturgröße.

3. Verfahren nach Anspruch 1, wobei das Erhalten der ersten Änderungsgröße Folgendes umfasst:
Vorhersagen eines Rotationsdrehmomentparameters des ersten Rotorblatts an der zweiten Position in der aktuellen Umdrehungsperiode nach einem Rotationsdrehmomentparameter des ersten Rotorblatts an der ersten Position in der aktuellen Umdrehungsperiode, einer Änderungsgröße des Rotationsdrehmomentparameters des ersten Rotorblatts vor dem Erreichen der ersten Position und einer vorhergesagten Dauer, wenn sich das erste Rotorblatt von der ersten Position zu der zweiten Position in der aktuellen Umdrehungsperiode bewegt; und
Erhalten der ersten Änderungsgröße auf der Grundlage des Rotationsdrehmomentparameters des ersten Rotorblatts an der ersten Position in der aktuellen Umdrehungsperiode und des Rotationsdrehmomentparameters des ersten Rotorblatts an der zweiten Position in der aktuellen Umdrehungsperiode.

4. Verfahren nach Anspruch 1, wobei das Erhalten der zweiten Rotorblattwurzel-Lastparameter und der dritten Rotorblattwurzel-Lastparameter Folgendes umfasst:
Bestimmen eines ersten Zeitpunkts, zu dem sich die anderen Rotorblätter an der ersten Position befinden, und eines zweiten Zeitpunkts, zu dem sich die anderen Rotorblätter an der zweiten Position in der vorhergehenden Umdrehungsperiode befinden, auf der Grundlage der vorhergesagten Dauer, wenn sich das erste Rotorblatt von der ersten Position zu der zweiten Position in der aktuellen Umdrehungsperiode bewegt, einer Berechnungsbeziehung zwischen einer Position und einer Rotordrehzahl, einer Rotordrehzahl, bei der sich das erste Rotorblatt an der ersten Position in der aktuellen Umdrehungsperiode befindet, und einer festen Positionsdifferenz zwischen den Rotorblättern; und
Bestimmen der Rotorblattwurzel-Lastparameter der anderen Rotorblätter zum ersten Zeitpunkt und zum zweiten Zeitpunkt jeweils als die zweiten Rotorblattwurzel-Lastparameter und die dritten Rotorblattwurzel-Lastparameter.

5. Verfahren nach Anspruch 2, wobei der Rotorblattwurzel-Lastparameter eine Rotorblattwurzel-Last in Schwenkrichtung und eine Rotorblattwurzel-Last in Schlagrichtung umfasst und die vorhergesagte Korrekturgröße eine Korrekturgröße in Schwenkrichtung und eine Korrekturgröße in Schlagrichtung umfasst,
wobei das Erhalten einer vorhergesagten Korrekturgröße unter Verwendung eines Gewichtungsfaktors, der jedem anderen Rotorblatt entspricht, des zweiten Rotorblattwurzel-Lastparameters und des dritten Rotorblattwurzel-Lastparameters, die jedem anderen Rotorblatt entsprechen, und der ersten Änderungsgröße Folgendes umfasst:
Erhalten der Korrekturgröße in Schwenkrichtung nach dem Gewichtungsfaktor, der jedem anderen Rotorblatt entspricht, und einer Differenz zwischen der Rotorblattwurzel-Last in Schwenkrichtung in dem dritten Rotorblattwurzel-Lastparameter und der Rotorblattwurzel-Last in Schwenkrichtung in dem zweiten Rotorblattwurzel-Lastparameter; und
Erhalten der Korrekturgröße in Schlagrichtung nach dem Gewichtungsfaktor, der jedem anderen Rotorblatt entspricht, einer Differenz zwischen der Rotorblattwurzel-Last in Schlagrichtung in dem dritten Rotorblattwurzel-Lastparameter und der Rotorblattwurzel-Last in Schlagrichtung in dem zweiten Rotorblattwurzel-Lastparameter und der ersten Änderungsgröße.

6. Verfahren nach Anspruch 5, wobei das Bestimmen der vorhergesagten Rotorblattwurzel-Last nach dem ersten Rotorblattwurzel-Lastparameter und der vorhergesagten Korrekturgröße Folgendes umfasst:
Bestimmen einer Summe der Rotorblattwurzel-Last in Schwenkrichtung in dem ersten Rotorblattwurzel-Lastparameter und der Korrekturgröße in Schwenkrichtung als eine vorhergesagte Rotorblattwurzel-Last in Schwenkrichtung;
Bestimmen einer Summe der Rotorblattwurzel-Last in Schlagrichtung in dem ersten Rotorblattwurzel-Lastparameter und der Korrekturgröße in Schlagrichtung als eine vorhergesagte Rotorblattwurzel-Last in Schlagrichtung; und
Kombinieren der vorhergesagten Rotorblattwurzel-Last in Schwenkrichtung und der vorhergesagten Rotorblattwurzel-Last in Schlagrichtung, um die vorhergesagte Rotorblattwurzel-Last zu erhalten.

7. Verfahren nach Anspruch 2, wobei der Rotorblattwurzel-Lastparameter eine Rotorblattwurzel-Last umfasst,
wobei das Erhalten einer vorhergesagten Korrekturgröße unter Verwendung eines Gewichtungsfaktors, der jedem anderen Rotorblatt entspricht, des zweiten Rotorblattwurzel-Lastparameters und des dritten Rotorblattwurzel-Lastparameters, die jedem anderen Rotorblatt entsprechen, und der ersten Änderungsgröße Folgendes umfasst:
Erhalten der vorhergesagten Korrekturgröße unter Verwendung des Gewichtungsfaktors, der jedem anderen Rotorblatt entspricht, einer Differenz zwischen der Rotorblattwurzel-Last in dem dritten Rotorblattwurzel-Lastparameter und der Rotorblattwurzel-Last in dem zweiten Rotorblattwurzel-Lastparameter, die jedem anderen Rotorblatt entsprechen, und der ersten Änderungsgröße;
wobei das Bestimmen der vorhergesagten Rotorblattwurzel-Last nach dem ersten Rotorblattwurzel-Lastparameter und der vorhergesagten Korrekturgröße Folgendes umfasst:
Bestimmen einer Summe des ersten Rotorblattwurzel-Lastparameters und der vorhergesagten Korrekturgröße als die vorhergesagte Rotorblattwurzel-Last.

8. Verfahren nach Anspruch 3, wobei der Rotationsdrehmomentparameter eine Rotorbeschleunigung, ein Drehmoment in Drehrichtung der Spindel oder eine Windgeschwindigkeit umfasst.

9. Vorrichtung zum Steuern einer Windturbine, umfassend:
ein erstes Erfassungsmodul (201), ausgebildet, um einen ersten Rotorblattwurzel-Lastparameter eines ersten Rotorblatts an einer ersten Position in einer aktuellen Umdrehungsperiode zu erhalten;
ein zweites Erfassungsmodul (202), ausgebildet, um zweite Rotorblattwurzel-Lastparameter, dritte Rotorblattwurzel-Lastparameter und eine erste Änderungsgröße zu erhalten, wobei die zweiten Rotorblattwurzel-Lastparameter Rotorblattwurzel-Lastparameter anderer Rotorblätter an der ersten Position in einer vorhergehenden Umdrehungsperiode umfassen, die dritten Rotorblattwurzel-Lastparameter Rotorblattwurzel-Lastparameter der anderen Rotorblätter an einer zweiten Position umfassen, die später als die erste Position in der vorhergehenden Umdrehungsperiode erreicht wird, und die erste Änderungsgröße einen Änderungstrend von Rotorblattwurzel-Lastparametern von Rotorblättern von der ersten Position zu der zweiten Position darstellt;
ein Vorhersagemodul (203), ausgebildet, um eine vorhergesagte Rotorblattwurzel-Last des ersten Rotorblatts an der zweiten Position in der aktuellen Umdrehungsperiode auf der Grundlage des ersten Rotorblattwurzel-Lastparameters, der zweiten Rotorblattwurzel-Lastparameter, der dritten Rotorblattwurzel-Lastparameter und der ersten Änderungsgröße zu erhalten; und
ein Steuermodul (204), ausgebildet, um die Windturbine nach der vorhergesagten Rotorblattwurzel-Last zu steuern.

10. Steuergerät für eine Windturbine, umfassend: einen Prozessor (302) und einen Speicher (301), der Computerprogrammanweisungen speichert,
wobei der Prozessor (302) beim Ausführen der Computerprogrammanweisungen das Verfahren zum Steuern einer Windturbine nach einem der Ansprüche 1 bis 8 ausführt.

11. Windturbine, umfassend das Steuergerät für eine Windturbine nach Anspruch 10.

## Revendications

1. Procédé de commande d'une éolienne, comprenant :
le fait (S101) d'obtenir un premier paramètre de charge d'emplanture de pale d'une première pale en une première position dans une période de rotation actuelle ;
le fait (S102) d'obtenir des deuxièmes paramètres de charge d'emplanture de pale, des troisièmes paramètres de charge d'emplanture de pale, et une première quantité de changement, dans lequel les deuxièmes paramètres de charge d'emplanture de pale comprennent des paramètres de charge d'emplanture de pale d'autres pales à la première position dans une période de rotation précédente, les troisièmes paramètres de charge d'emplanture de pale comprennent des paramètres de charge d'emplanture de pale des autres pales à une deuxième position qui est atteinte plus tard que la première position dans la période de rotation précédente, et la première quantité de changement représente une tendance de changement de paramètres de charge d'emplanture de pale de pales depuis la première position jusqu'à la deuxième position ;
le fait (S103) d'obtenir une charge d'emplanture de pale prédite de la première pale à la deuxième position dans la période de rotation actuelle sur la base du premier paramètre de charge d'emplanture de pale, des deuxièmes paramètres de charge d'emplanture de pale, des troisièmes paramètres de charge d'emplanture de pale et de la première quantité de changement ; et
le fait (S104) de commander l'éolienne selon la charge d'emplanture de pale prédite.

2. Procédé selon la revendication 1, dans lequel l'obtention d'une charge d'emplanture de pale prédite de la première pale à la deuxième position dans la période de rotation actuelle sur la base du premier paramètre de charge d'emplanture de pale, des deuxièmes paramètres de charge d'emplanture de pale, des troisièmes paramètres de charge d'emplanture de pale et de la première quantité de changement comprend :
le fait (S1036) d'obtenir une quantité de correction prédite en utilisant un poids correspondant à chaque autre pale, le deuxième paramètre de charge d'emplanture de pale et le troisième paramètre de charge d'emplanture de pale correspondant à chaque autre pale, et la première quantité de changement ; et
le fait (S1037) de déterminer la charge d'emplanture de pale prédite selon le premier paramètre de charge d'emplanture de pale et la quantité de correction prédite.

3. Procédé selon la revendication 1, dans lequel l'obtention de la première quantité de changement comprend :
le fait de prédire un paramètre de couple de rotation de la première pale à la deuxième position dans la période de rotation actuelle selon un paramètre de couple de rotation de la première pale à la première position dans la période de rotation actuelle, une quantité de changement du paramètre de couple de rotation de la première pale avant d'atteindre la première position, et une durée prédite lorsque la première pale va de la première position à la deuxième position dans la période de rotation actuelle ; et
le fait d'obtenir la première quantité de changement sur la base du paramètre de couple de rotation de la première pale à la première position dans la période de rotation actuelle et du paramètre de couple de rotation de la première pale à la deuxième position dans la période de rotation actuelle.

4. Procédé selon la revendication 1, dans lequel l'obtention des deuxièmes paramètres de charge d'emplanture de pale et des troisièmes paramètres de charge d'emplanture de pale comprend :
le fait de déterminer un premier instant auquel les autres pales sont à la première position et un deuxième instant auquel les autres pales sont à la deuxième position dans la période de rotation précédente sur la base de la durée prédite lorsque la première pale va de la première position à la deuxième position dans la période de rotation actuelle, d'une relation de calcul entre une position et une vitesse de rotation du rotor, d'une vitesse de rotation du rotor à laquelle la première pale est à la première position dans la période de rotation actuelle, et d'une différence de position fixe entre les pales ; et
le fait de déterminer les paramètres de charge d'emplanture de pale des autres pales au premier instant et au deuxième instant comme étant respectivement les deuxièmes paramètres de charge d'emplanture de pale et les troisièmes paramètres de charge d'emplanture de pale.

5. Procédé selon la revendication 2, dans lequel le paramètre de charge d'emplanture de pale comprend une charge d'emplanture de pale dans la direction "edgewise", ou direction bordante, et une charge d'emplanture de pale dans la direction "flapwise", ou direction battante, la quantité de correction prédite comprend une quantité de correction dans la direction edgewise et une quantité de correction dans la direction flapwise,
l'obtention d'une quantité de correction prédite en utilisant un poids correspondant à chaque autre pale, le deuxième paramètre de charge d'emplanture de pale et le troisième paramètre de charge d'emplanture de pale correspondant à chaque autre pale, et la première quantité de changement, comprend :
le fait d'obtenir la quantité de correction dans la direction edgewise selon le poids correspondant à chaque autre pale et une différence entre la charge d'emplanture de pale dans la direction edgewise dans le troisième paramètre de charge d'emplanture de pale et la charge d'emplanture de pale dans la direction edgewise dans le deuxième paramètre de charge d'emplanture de pale ; et
le fait d'obtenir la quantité de correction dans la direction flapwise selon le poids correspondant à chaque autre pale, une différence entre la charge d'emplanture de pale dans la direction flapwise dans le troisième paramètre de charge d'emplanture de pale et la charge d'emplanture de pale dans la direction flapwise dans le deuxième paramètre de charge d'emplanture de pale, et la première quantité de changement.

6. Procédé selon la revendication 5, dans lequel la détermination de la charge d'emplanture de pale prédite selon le premier paramètre de charge d'emplanture de pale et la quantité de correction prédite, comprend :
le fait de déterminer une somme de la charge d'emplanture de pale dans la direction edgewise dans le premier paramètre de charge d'emplanture de pale et de la quantité de correction dans la direction edgewise comme étant une charge d'emplanture de pale prédite dans la direction edgewise ;
le fait de déterminer une somme de la charge d'emplanture de pale dans la direction flapwise dans le premier paramètre de charge d'emplanture de pale et de la quantité de correction dans la direction flapwise comme étant une charge d'emplanture de pale prédite dans la direction flapwise ; et
le fait de combiner la charge d'emplanture de pale prédite dans la direction edgewise et la charge d'emplanture de pale prédite dans la direction flapwise pour obtenir la charge d'emplanture de pale prédite.

7. Procédé selon la revendication 2, dans lequel le paramètre de charge d'emplanture de pale comprend une charge d'emplanture de pale,
l'obtention d'une quantité de correction prédite en utilisant un poids correspondant à chaque autre pale, le deuxième paramètre de charge d'emplanture de pale et le troisième paramètre de charge d'emplanture de pale correspondant à chaque autre pale, et la première quantité de changement, comprend :
le fait d'obtenir la quantité de correction prédite en utilisant le poids correspondant à chaque autre pale, une différence entre la charge d'emplanture de pale dans le troisième paramètre de charge d'emplanture de pale et la charge d'emplanture de pale dans le deuxième paramètre de charge d'emplanture de pale correspondant à chaque autre pale, et la première quantité de changement ;
la détermination de la charge d'emplanture de pale prédite selon le premier paramètre de charge d'emplanture de pale et la quantité de correction prédite comprend :
le fait de déterminer une somme du premier paramètre de charge d'emplanture de pale et de la quantité de correction prédite comme étant la charge d'emplanture de pale prédite.

8. Procédé selon la revendication 3, dans lequel le paramètre de couple de rotation comprend une accélération du rotor, un couple dans le sens de rotation de l'arbre principal, ou une vitesse du vent.

9. Appareil de commande d'une éolienne, comprenant :
un premier module d'obtention (201), configuré pour obtenir un premier paramètre de charge d'emplanture de pale d'une première pale à une première position dans une période de rotation actuelle ;
un deuxième module d'obtention (202), configuré pour obtenir des deuxièmes paramètres de charge d'emplanture de pale, des troisièmes paramètres de charge d'emplanture de pale et une première quantité de changement, les deuxièmes paramètres de charge d'emplanture de pale comprenant des paramètres de charge d'emplanture de pale d'autres pales à la première position dans une période de rotation précédente, les troisièmes paramètres de charge d'emplanture de pale comprenant des paramètres de charge d'emplanture de pale des autres pales à une deuxième position qui est atteinte plus tard que la première position dans la période de rotation précédente, et la première quantité de changement représentant une tendance de changement de paramètres de charge d'emplanture de pale de pales depuis la première position jusqu'à la deuxième position ;
un module de prédiction (203), configuré pour obtenir une charge d'emplanture de pale prédite de la première pale à la deuxième position dans la période de rotation actuelle sur la base du premier paramètre de charge d'emplanture de pale, des deuxièmes paramètres de charge d'emplanture de pale, des troisièmes paramètres de charge d'emplanture de pale et de la première quantité de changement ; et
un module de commande (204), configuré pour commander l'éolienne selon la charge d'emplanture de pale prédite.

10. Dispositif de commande pour une éolienne, comprenant : un processeur (302) et une mémoire (301) stockant des instructions de programme informatique,
dans lequel le processeur (302) met en œuvre le procédé de commande d'une éolienne selon l'une quelconque des revendications 1 à 8 lors de l'exécution des instructions de programme informatique.

11. Éolienne, comprenant le dispositif de commande pour une éolienne selon la revendication 10.
